# FASCICULE DE BREVET EUROPEEN

(11) **EP 0 540 970 B1**
(45) Date de publication et mention de la délivrance du brevet: **15.05.1996**
(21) Numéro de dépôt: 92118277.0
(22) Date de dépôt: 26.10.1992
(51) Int. Cl.: F16B 43/00, F04D 19/04

(54) **Entretoise à épaisseur ajustable**
Abstandhalter mit einstellbarer Dicke
Spacer element with adjustable thickness

(30) Priorité: 04.11.1991 FR 9113562
(43) Date de publication de la demande: 12.05.1993
(73) Titulaire: ALCATEL CIT, F-75008 Paris (FR)
(72) Inventeur: Boivin, Jean-Claude, F-74330 Poissy (FR); Cholet, Jean-Emile, F-74940 Annecy le Vieux (FR); Falcoz, Pierre, F-74540 Alby Sur Cheran (FR); Mathieu, Luc, F-74940 Annecy le Vieux (FR)
(74) Mandataire: Weinmiller, Jürgen

(56) Documents cités:
- FR-A- 1 124 922
- FR-A- 1 475 765
- FR-A- 2 633 674

## Description

La présente invention concerne un ensemble mécanique comprenant l'assemblage de deux pièces déterminant deux surfaces d'appui appartenant respectivement à l'une et à l'autre pièce et séparées l'une de l'autre par une distance déterminée, entre lesquelles est disposé un empilage comprenant une entretoise.

De tels empilages sont utilisés dans de nombreux domaines d'applications, par exemple dans la construction de stators de pompes turbo-moléculaires, dans lesquels un ensemble de stator comprend alternativement des disques de stator et des entretoises, l'ensemble étant disposé entre des surfaces d'appui respectives d'un corps de pompe et d'un carter fixé sur celui-ci.

Du fait des tolérances dimensionnelles des pièces à empiler et à assembler, on est actuellement obligé de prévoir, lors du montage, soit un réglage, soit une reprise d'usinage, soit encore un appairage de pièces. Toutes ces procédures sont coûteuses et peu pratiques.

Par ailleurs, le document FR-A-1 475 765 décrit une pompe à vide turbomoléculaire dans laquelle le stator est constitué par un empilage de disques circulaires emmanchés dans un carter. Ces disques sont bloqués entre un épaulement du carter à une extrémité et une butée élastique à l'autre extrémité.

Cependant, cette butée élastique nécessite des moyens de fixation, elle n'assure qu'un appui ponctuel de l'empilage et en cas de rentrée d'air il peut y avoir un mouvement vers le bas provoquant un endommagement des ailettes rotoriques.

L'invention vise à remédier aux inconvénients des moyens utilisés jusqu'à présent pour réaliser de tels assemblages, et elle a pour objet un ensemble mécanique comprenant l'assemblage de deux pièces déterminant deux surfaces d'appui appartenant respectivement à l'une et à l'autre pièce et séparées l'une de l'autre par une distance déterminée, entre lesquelles est disposé un empilage comprenant une entretoise, caractérisé en ce que ladite entretoise comporte une portion susceptible de subir une déformation plastique, dans le sens de l'empilage, sous l'effet du premier montage de l'empilage entre lesdites pièces à assembler.

Cette portion déformable est dimensionnée, premièrement, de façon à conférer à l'empilage, avant son montage entre les pièces à assembler et compte tenu des tolérances dimensionnelles de l'ensemble dans le sens de l'empilage, une hauteur totale supérieure à la distance effective entre lesdites surfaces d'appui, de telle façon que la déformation de ladite portion de l'entretoise permette d'absorber lesdites tolérances; deuxièmement, de façon à ce qu'un écrasement minimum lui soit donné, cette portion restant dans le domaine élastique, pour qu'elle joue le rôle de rondelle élastique maintenant fermement l'empilage.

De préférence, au moins la portion déformable de l'entretoise est réalisée en un matériau mou, ou élastique et présente, dans le sens de l'empilage, une section transversale en forme de couteau. Ce couteau peut être orienté dans le sens de l'empilage, ou être incliné par rapport à celui-ci.

Les caractéristiques et avantages de l'invention apparaîtront clairement à la lumière de la description suivante de deux formes de réalisation, indiquées à titre d'exemple et illustrées dans les dessins annexés, dans lesquels :

La figure 1 est une vue en coupe axiale d'une cellule de pompage d'une pompe turbomoléculaire, au stator de laquelle l'invention est applicable.

La figure 2 est une vue en coupe d'une entretoise selon une première forme d'exécution de l'invention.

La figure 3 est une vue en coupe d'un détail d'un assemblage utilisant l'entretoise de la figure 2.

La figure 4 est une vue en coupe d'une deuxième forme d'exécution d'une entretoise déformable; et

La figure 5 est une vue en coupe d'un détail d'un assemblage utilisant l'entretoise de la figure 4.

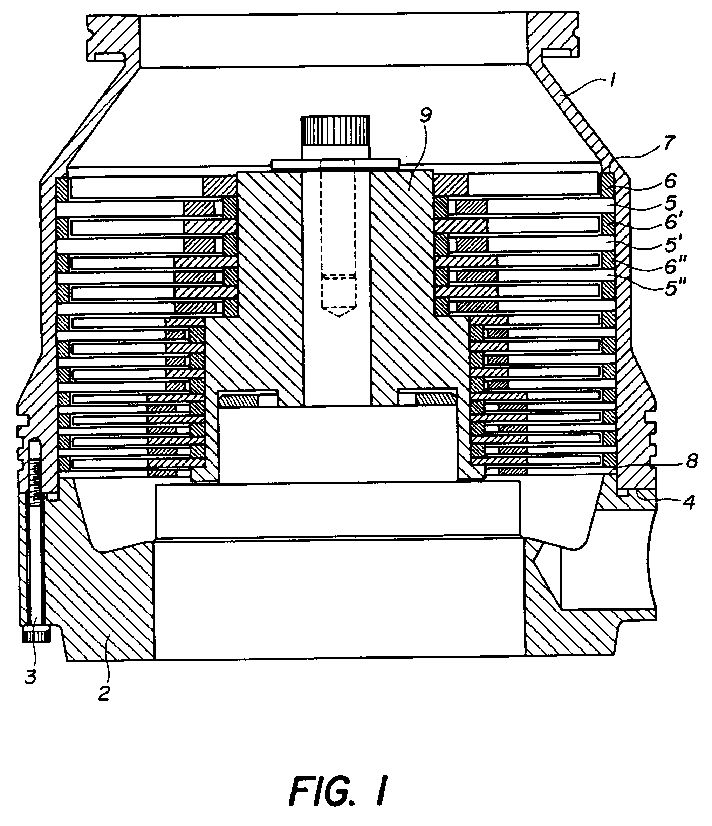

Sur la représentation schématique de la figure 1, on distingue un carter 1 d'une cellule de pompage, monté et fixé sur un corps de pompe 2 au moyen de vis, telles que 3, la surface de contact entre ces deux pièces étant désignée par 4.

Un ensemble de disques de stator 5, 5', 5" etc... alternant avec des entretoises 6, 6', 6", etc.. est empilé entre des surfaces d'appui 7 et 8 qui sont séparées l'une de l'autre d'une distance fixe déterminée. Les surfaces d'appui 7 et 8 appartiennent respectivement au carter 1 et au corps de pompe 2. La référence 9 désigne un ensemble de rotor de cette cellule de pompage.

Pour que l'empilage des disques du stator et des entretoises soit parfaitement ajusté entre les surfaces d'appui 7 et 8, et soit maintenu mécaniquement en rotation et en translation, la hauteur de cet empilage doit correspondre précisément à la distance entre ces surfaces d'appui. Compte tenu de la somme des tolérances dimensionnelles de toutes les pièces en présence, on était pratiquement obligé, jusqu'à présent, de prévoir un réglage de l'entretoise supérieure 6 ou une reprise d'usinage de cette pièce. D'autres moyens théoriquement possibles, tel que l'appairage des disques de stator et du carter, posent des problèmes en service après-vente ou s'avèrent encore plus onéreux, par exemple la reprise en usinage du carter ou du corps de pompe. D'une manière pratique, l'équipe de montage a ainsi actuellement à sa disposition un jeu d'entretoises supérieures 6 de différentes épaisseurs, et détermine l'entretoise appropriée lors du montage final.

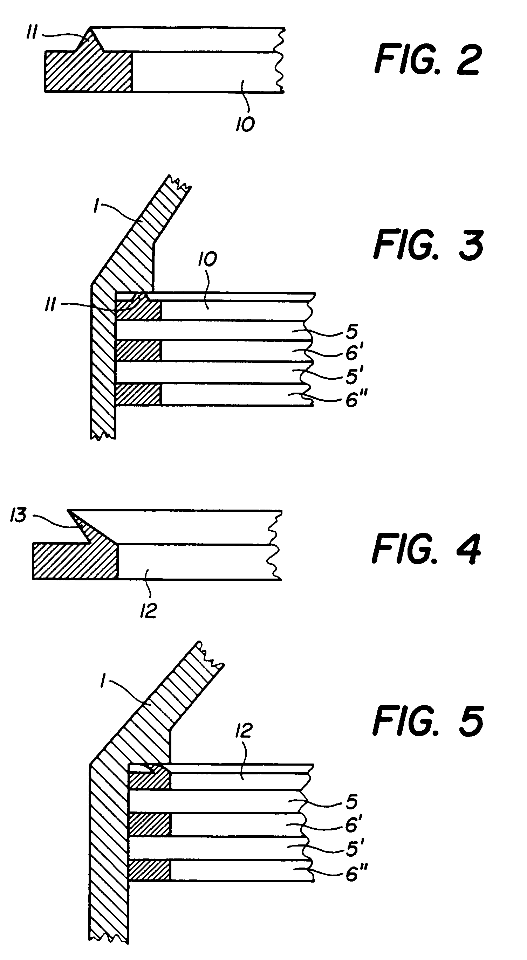

Selon l'invention, l'entretoise 6 ou l'une des autres entretoises 6', 6'', etc.. est remplacée par une entretoise 10 présentant une section transversale telle que montrée par exemple à la figure 2. Une telle entretoise 10 comporte une portion 11 en forme de couteau, faisant saillie dans le sens de l'empilage. Cette entretoise est réalisée en un matériau mou ou élastique dans le cas de la figure 4, de sorte que la portion 11 peut s'écraser lors du premier montage de l'ensemble, comme l'illustre la figure 3. Il en résulte un ajustement très précis de l'empilage, sans qu'aucun réglage ne soit nécessaire. Une fois la partie en forme de couteau déformée plastiquement, l'ensemble des pièces assemblées est démontable et remontable, sans inconvénients, puisque l'entretoise 10 a été amenée à la cote de réglage. En outre, une déformation élastique réversible maintient l'empilage disques de stator-entretoises grâce à son effet ressort.

Les dimensions, et notamment la hauteur de la partie déformable 11 de l'entretoise 10 sont choisies de façon à pouvoir absorber l'écart maximal des tolérances de l'empilage des disques de stator et des entretoises.

La figure 4 montre une variante d'exécution 12 d'une telle entretoise, selon laquelle une portion déformable 13 se présente sous forme d'un couteau incliné par rapport au sens de l'empilage. La figure 5 montre la section d'une telle entretoise après déformation plastique.

## Revendications

1. Ensemble mécanique comprenant l'assemblage de deux pièces (1, 2) déterminant deux surfaces d'appui (7, 8) appartenant respectivement à l'une et à l'autre pièce et séparées l'une de l'autre par une distance déterminée, entre lesquelles est disposé un empilage comprenant une entretoise, caractérisé en ce que ladite entretoise comporte une portion susceptible de subir une déformation plastique, dans le sens de l'empilage, sous l'effet du premier montage de l'empilage entre lesdites pièces à assembler.

2. Ensemble mécanique selon la revendication 1, caractérisé en ce que ladite portion déformable de ladite entretoise (11, 13) est dimensionnée de façon à conférer à l'empilage, avant son montage entre les pièces (1, 2) à assembler et compte tenu de tolérances dimensionnelles de l'ensemble dans le sens de l'empilage, une hauteur totale supérieure à la distance effective entre lesdites surfaces d'appui (7, 8), de telle façon que la déformation de ladite portion (11, 13) de l'entretoise (10, 12) permette de compenser cette tolérance dimensionnelle.

3. Ensemble selon l'une des revendications 1 ou 2, caractérisé en ce qu'au moins la portion déformable (11, 13) de l'entretoise est réalisée en un matériau sensiblement plus mou que celui des autres pièces à assembler, et présente, dans le sens de l'empilage, une section transversale en forme de couteau.

4. Ensemble selon la revendication 3, caractérisé en ce que ledit couteau (11) est orienté dans le sens de l'empilage.

5. Ensemble selon la revendication 3, caractérisé en ce que ledit couteau (13) est incliné par rapport au sens de l'empilage.

## Patentansprüche

1. Mechanische Einheit aus zwei zusammengesetzten Bauteilen (1, 2), die zwei Auflageflächen (7, 8) definieren, welche zu dem einen bzw. dem anderen Teil gehören und voneinander durch einen bestimmten Abstand getrennt sind, zwischen denen ein Stapel mit einem Abstandshalter angeordnet ist, dadurch gekennzeichnet, daß der Abstandshalter einen Abschnitt aufweist, der in Stapelrichtung unter der Wirkung der ersten Montage des Stapels zwischen den zusammenzubauenden Teilen plastisch verformt werden kann.

2. Mechanische Einheit nach Anspruch 1, dadurch gekennzeichnet, daß der verformbare Abschnitt des Abstandshalters (11, 13) so bemessen ist, daß er dem Stapel vor seiner Montage zwischen den zusammenzubauenden Bauteilen (1, 2) und unter Berücksichtigung der Dimensionstoleranzen der Einheit in Stapelrichtung eine Gesamthöhe verleiht, die größer ist als der effektive Abstand zwischen den Auflageflächen (7, 8), so daß die Verformung des Abschnitts (11, 13) des Abstandshalters (10, 12) es ermöglicht, diese Dimensionstoleranz zu absorbieren.

3. Einheit nach einem der Ansprüche 1 und 2, dadurch gekennzeichnet, daß mindestens der verformbare Abschnitt (11, 13) des Abstandshalters aus einem Material hergestellt ist, das wesentlich weicher als das der anderen zusammenzubauenden Bauteile ist, und daß er in Stapelrichtung eine Messerform aufweist.

4. Mechanische Einheit nach Anspruch 3, dadurch gekennzeichnet, daß das Messer (11) in Stapelrichtung ausgerichtet ist.

5. Mechanische Einheit nach Anspruch 3, dadurch gekennzeichnet, daß das Messer (13) in Bezug auf den Stapel geneigt ist.

## Claims

1. A mechanical assembly comprising two assembled-together parts (1, 2) defining two abutment surfaces (7, 8) belonging to respective ones of said parts and spaced apart by a determined distance, and between which there is disposed a stack including a spacer, said assembly being characterized in that said spacer includes a deformable portion suitable for being plastically deformed in the stacking direction under the effect of the stack being installed for the first time between said parts to be assembled together.

2. A mechanical assembly according to claim 1, characterized in that, given the dimensional tolerances of the assembly in the stacking direction, the dimensions of said deformable portion of said spacer (11, 13) are such that, before the stack is installed between the parts (1, 2) to be assembled together, the overall height of the stack is greater than the effective distance between said abutment surfaces (7, 8), so that deforming said portion (11, 13) of the spacer (10, 12) enables the dimensional tolerances to be taken up.

3. An assembly according to claim 1 or 2, characterized in that at least the deformable portion (11, 13) of the spacer is made of a material that is substantially softer than the materials of the other parts to be assembled, and whose cross-section in the stacking direction is knife-shaped.

4. An assembly according to claim 3, characterized in that said knife-shape (11) extends in the stacking direction.

5. An assembly according to claim 3, characterized in that said knife-shape (13) slopes relative to the stacking direction.
